# DEMANDE DE BREVET EUROPEEN

(11) **EP 1 070 665 A1**
(43) Date de publication de la demande: **24.01.2001**
(21) Numéro de dépôt: 99401844.8
(22) Date de dépôt: 21.07.1999
(51) Int. Cl.: B64G 1/28, G01C 19/06, G01C 19/08, G05D 1/08

(54) **Actionneur gyroscopique**

(71) Demandeur: Astrium SAS, 78140 Velizy-Villacoublay (FR)
(72) Inventeur: Blais, Thierry, 31320 Vigoulet (FR)
(74) Mandataire: Fort, Jacques

(57) **Abrégé**

L'actionneur gyroscopique comprend un support monté sur une embase (10) par des moyens permettant de le faire tourner autour d'un premier axe (20). Le support porte une toupie (34) par l'intermédiaire de moyens permettant de l'entraîner en rotation à vitesse élevée autour d'un second axe (32) orthogonal au premier. La toupie (34) comprend deux flasques (36) reliés par un arbre de diamètre très inférieur au diamètre des flasques et le support comprend des moyens sur lesquels tourne l'arbre.

## Description

La présente invention concerne les actionneurs gyroscopique du type comprenant un support monté sur une embase par des moyens permettant de le faire tourner autour d'un premier axe et portant une toupie par l'intermédiaire de moyens permettant de faire tourner la toupie à une vitesse élevée autour d'un second axe, perpendiculaire au premier.

De tels actionneurs trouvent une application importante dans les systèmes de pointage de satellites. L'intérêt des actionneurs, comparé aux roues de réaction, est de fournir, à masse égale, des couples beaucoup plus élevés, mieux adaptés à des changements d'orientation rapide des plateformes sur lesquelles elles sont montées.

Jusqu'à présent, on a essentiellement utilisé des actionneurs gyroscopiques de grande taille, très lourds, sur des satellites de plusieurs tonnes. L'invention vise au contraire à fournir un actionneur gyroscopique de petite taille, peu encombrant, capable de fournir des couples suffisants pour provoquer des manoeuvres rapides de satellites de classes intermédiaires. Une telle agilité en pointage est notamment recherchée pour les satellites d'observation.

Dans ce but, l'invention propose notamment un actionneur gyroscopique dont la toupie comprend deux flasques reliées par un arbre de diamètre très inférieur à celui des flasques et dont le support comporte des moyens dans lesquels tourne l'arbre.

Une telle constitution présente divers avantages : l'essentiel des moyens permettant d'orienter l'axe de rotation de la toupie (c'est-à-dire des moyens définissant un premier axe ou axe de basculement) sont placés à l'intérieur de l'enveloppe virtuelle de la toupie.

L'actionneur suivant l'invention est notamment utilisable sur des satellites placés sur une orbite basse ou intermédiaire, ayant une masse de l'ordre de la tonne, pour lesquels un moment cinétique d'environ 10Nms est souhaitable.

On peut notamment atteindre ce résultat avec une toupie tournant à une vitesse de l'ordre de 5000 tours par minute, et des moyens d'entraînement en rotation autour de l'axe de basculement prévus pour des vitesses maximales plus faibles de plusieurs ordres de grandeur, ne dépassant généralement pas 20 rd/s.

Les forces et couples apparaissant lors de l'accélération et de la décélération autour de l'axe de basculement sont réduites, grâce à l'équilibrage de la toupie, dont le centre de masse est proche de l'axe de basculement.

De plus, l'absence de porte à faux important permet de réduire les contraintes mécaniques appliquées aux moyens de guidage et aux paliers lors des sollicitations extérieures, notamment lors du lancement d'un satellite. Il devient en général inutile de prévoir des moyens de gerbage, c'est-à-dire des moyens de maintien en place des composants les uns par rapport aux autres au cours des phases de lancement et d'amenée à poste.

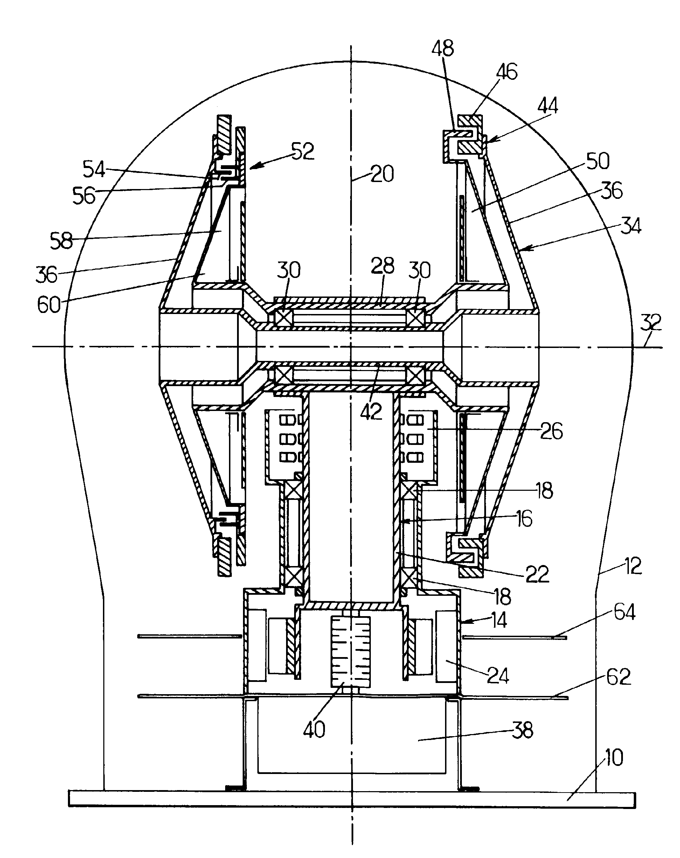

Les caractéristiques ci-dessus ainsi que d'autres apparaîtront mieux à la lecture de la description qui suit d'un mode particulier de réalisation de l'invention, donné à titre d'exemple non limitatif. La description se réfère à la figure unique qui l'accompagne et qui est une vue en coupe de l'actionneur par un plan passant par l'axe de basculement et l'axe de rotation de la toupie.

L'actionneur gyroscopique montré sur la figure comporte une embase 10 qui définit, avec une enveloppe étanche 12, un volume dans lequel est placé l'ensemble de l'actionneur. Sur l'embase est fixé un mécanisme de basculement ayant une partie statorique 14 et une partie rotorique qui constitue un support 16. La partie statorique 14 est constituée par un manchon dans lequel sont placés des moyens de guidage (roulement à billes par exemple) 18 espacés l'un de l'autre de façon à donner une orientation précise à un axe de basculement 20 autour duquel tourne un tube 22 appartenant au support.

Ces roulements à billes doivent assurer la tenue au lancement et présenter des couples parasites suffisamment faibles pour garantir les performances de basculement recherchées, en particulier en mode de pointage fin. Ils peuvent être lubrifiés par dépôt local d'huile.

Les parties statorique et rotorique comportent également les composants d'un moteur couple à commutation électronique 24, ayant des aimants permanents sur la partie rotorique.

Les passages de courant électrique entre les parties rotorique et statorique peuvent être effectués par des connecteurs tournants 26 à bague et balais, représentés au nombre de trois sur la figure.

La position angulaire du support ou partie rotorique est donnée à tout instant par un codeur 38 présentant une partie fixée rigidement à la partie statorique 14 et un rotor relié au tube 22 par un accouplement élastique 40.

On peut notamment utiliser un codeur optique, à sortie incrémentale sous forme de signaux en quadrature. Ces signaux peuvent être traités par une électronique de proximité capable de fonctionner en modes périodemètre, pour le pointage fin, et fréquencemètre, lors des basculements à vitesse rapide.

Les signaux de sortie du codeur peuvent être utilisés dans plusieurs boucles de régulation et de mesure :
- une boucle d'auto-pilotage du moteur effectuant la commutation des phases et le contrôle des courants de phase en fonction de la position instantanée ;
- mesure de l'orientation de la toupie, et de contrôle de la vitesse instantanée de basculement pour le contrôle du couple généré sur le satellite.

A l'extrémité du tube 16 est fixée une douille 28 portant elle aussi des guidages 30 qui définissent l'axe 32 de rotation d'une toupie 34. La toupie peut être regardée comme comportant deux flasques 36 reliées par un arbre creux 42 porté par les guidages 30.

Cette disposition permet de choisir le diamètre des roulements 30 de façon à assurer le meilleur compromis possible entre la tenue mécanique lors du lancement et après une durée de vie importante en orbite, un couple visqueux résistif acceptable et une fréquence propre de flexion de l'arbre hors du domaine de fréquence parasite susceptible d'être appliquée. Pour éviter la pollution de l'intérieur de l'enveloppe 12, les roulements à billes peuvent être munis de chicanes qui évitent que de l'huile déposée localement ne s'échappe.

La toupie doit être entraînée en rotation à une vitesse élevée, généralement constante. Un moteur d'entraînement de la toupie comporte, dans le cas présenté sur la figure, un moteur couple 44 sans balais et sans fer, généralement à commutation électronique, dont le couple compense les dissipations d'énergie par frottement. Il peut comporter généralement un rotor annulaire passif appartenant à la périphérie d'un des flasques 36 et un enroulement 48 alimenté par l'intermédiaire des connecteurs tournants 26 et fixé à une jante 58 parallèle au flasque et solidaire de la douille 28. L'électronique 50 de commande et de régulation de vitesse du moteur 44 peut être placée sur une ou des cartes à circuit imprimé insérées à l'intérieur de la jante 58 parallèle au flasque qui est muni du moteur, et à laquelle on peut donner une forme en champignon.

La vitesse de rotation est mesurée par un tachymètre 52 ayant une couronne 54 fixée à l'autre flasque 36 et une partie active 56 appartenant à une seconde jante 58, similaire à celle qui supporte l'enroulement 48. La seconde jante peut contenir une carte 60 de traitement des signaux fournis par le tachymètre, reliée à l'extérieur par l'un des connecteurs tournant 26.

Le tachymètre 52 est avantageusement sans contacts. On peut notamment utiliser un tachymètre ayant des coupleurs opto-électroniques. Chaque coupleur comporte par exemple au moins une diode électroluminescente et au moins un phototransistor porté par la jante, coopérant avec la couronne annulaire 54 qui présente une alternance de zones de transmission et d'occultation d'un faisceau entre la diode électroluminescente et le phototransistor.

Les moyens d'alimentation des moteurs 44 à partir d'une source électrique extérieure non représentée peuvent être montés sur une carte 62 placée autour de la base de la partie statorique 14. Les moyens d'alimentation du moteur de basculement 24 peuvent être placés sur une autre carte 64. Des connexions avec l'extérieur, non représentées, permettent de commander le basculement à partir d'un circuit extérieur.

On a réalisé un actionneur du type ci-dessus défini dont la masse totale est de l'ordre de 6 kg, y compris l'électronique de proximité placé à l'intérieur de l'enveloppe, capable de fournir un moment cinétique allant jusqu'à 10Nms, avec une consommation inférieure à 50 watts lors des manoeuvres de basculement. La toupie peut aisément être équilibrée de façon suffisante pour que l'actionneur puisse supporter les vibrations et les accélérations subies lors du lancement. L'enveloppe 12 peut être étanche de façon que le fonctionnement soit le même dans l'espace et au sol. Enfin, l'actionneur peut être testé au sol sans qu'il soit nécessaire de disposer de moyens permettant de simuler une absence de gravité.

## Revendications

1. Actionneur gyroscopique comprenant un support monté sur une embase (10) par des moyens permettant de le faire tourner autour d'un premier axe (20), et portant une toupie (34) par l'intermédiaire de moyens permettant de l'entraîner en rotation à vitesse élevée autour d'un second axe (32) orthogonal au premier, caractérisé en ce que la toupie (34) comprend deux flasques (35) reliés par un arbre de diamètre très inférieur au diamètre des flasques et en ce que le support comprend des moyens sur lesquels tourne l'arbre.

2. Actionneur selon la revendication 1, caractérisé en ce que les moyens d'entraînement de la toupie en rotation comprennent un moteur couple sans balais et sans fer ayant un rotor annulaire passif appartenant à la périphérie d'un des flasques (36) et un enroulement (48) alimenté par l'intermédiaire de connecteurs tournants (26) placés entre le support et l'embase.

3. Actionneur selon la revendication 2, caractérisé en ce que l'enroulement (48) est fixé à la périphérie d'une jante (58) solidaire du support.

4. Actionneur selon la revendication 1, 2 ou 3, caractérisé en ce qu'il comporte un tachymètre (52) ayant une couronne passive (54) fixée à un flasque (36) et une partie active (56) appartenant à une jante (58) solidaire du support.

5. Actionneur selon la revendication 4, caractérisé en ce que le tachymètre est sans contacts.

6. Actionneur selon la revendication 5, caractérisé en ce que le tachymètre comporte au moins un coupleur octoélectronique ayant une diode électroluminescente et un phonotransistor portés par la jante, coopérant avec la couronne annulaire (54) qui présente une alternance de zones de transmission et d'occultation d'un faisceau lumineux entre la diode électroluminescente et le photo-transistor.

7. Actionneur selon l'une quelconque des revendications précédentes, caractérisé en ce que les moyens permettant de faire tourner le support comprennent un moteur couple à courant continu et à commutation électronique (24) ayant des aimants permanents sur le support et un enroulement sur une partie statorique solidaire de l'embase (10).

8. Actionneur selon l'une quelconque des revendications précédentes, caractérisé en ce qu'il comporte un codeur (38) de position angulaire du support ayant une partie solidaire de l'embase et un rotor relié au support par un accouplement élastique (40).
